# EUROPÄISCHE PATENTSCHRIFT

(11) **EP 2 619 738 B1**
(45) Veröffentlichungstag und Bekanntmachung des Hinweises auf die Patenterteilung: **17.01.2018**
(21) Anmeldenummer: 11773383.2
(22) Anmeldetag: 20.09.2011
(51) Int. Cl.: G08B 13/194, G07C 9/00, G08B 13/196, G06K 9/00, H04N 7/18

(54) **VERFAHREN ZUM KONFIGURIEREN EINES ÜBERWACHUNGSSYSTEMS UND KONFIGURIERBARES ÜBERWACHUNGSSYSTEM**
METHOD FOR CONFIGURING A MONITORING SYSTEM AND CONFIGURABLE MONITORING SYSTEM
PROCÉDÉ DE CONFIGURATION D'UN SYSTÈME DE SURVEILLANCE ET SYSTÈME DE SURVEILLANCE CONFIGURABLE

(30) Priorität: 21.09.2010 DE 102010046220
(43) Veröffentlichungstag der Anmeldung: 31.07.2013
(73) Patentinhaber: HELLA GmbH & Co. KGaA, 59552 Lippstadt (DE)
(72) Erfinder: SONG, Miao, 10969 Berlin (DE); POHL, Stefan, 13088 Berlin (DE)
(74) Vertreter: Pfenning, Meinig & Partner mbB
(86) Internationale Anmeldenummer: PCT/EP2011/004764
(87) Internationale Veröffentlichungsnummer: WO 2012/038087

(56) Entgegenhaltungen:
- EP-A2- 0 853 299
- WO-A2-2005/067424
- DE-A1-102005 009 626
- US-A1- 2005 094 879
- US-B1- 6 771 818

## Beschreibung

Die Erfindung betrifft ein Verfahren zum Konfigurieren eines auf einer Aufnahme von Höhenkarten beruhenden Überwachungssystems sowie ein entsprechend konfigurierbares Überwachungssystems.

Bei diesem Überwachungssystem kann es sich z.B. um ein Personenzählsystem oder einen anderen Zähler handeln. Solche Überwachungssysteme sind dazu eingerichtet, aufgenommene Höhenkarten eines Überwachungsbereichs auszuwerten, um Bewegungen in der Höhenkarte festzustellen, z.B. Bewegungen von Personen oder Objekten von einem Eingangsbereich zu einem Ausgangsbereich. Als Höhenkarte sei dabei hier und nachfolgend ganz allgemein ein Bild bezeichnet, dass Tiefeninformationen enthält.

Die Druckschrift EP 0 853 299 A2 zeigt ein aus dem Stand der Technik bekanntes Überwachungssystem dieser Art, das zum Ansteuern einer selbsttätig öffnenden Tür vorgesehen ist. Ein vergleichbares Überwachungssystem ist auch in der Druckschrift US 6,771,818 B1 beschrieben.

Wenn sich nun innerhalb des Überwachungsbereichs Hindernisse befinden, werden auch diese in der Höhenkarte abgebildet. Insbesondere, wenn die Hindernisse von der gleichen Größenordnung oder von vergleichbarer Höhe sind wie zu erfassende bewegte Objekte oder Personen, können sich Probleme dadurch ergeben, dass diese Objekte oder Personen in der Höhenkarte mit den Hindernissen verschmelzen und dadurch u.U. nicht mehr eindeutig erfasst werden können. Das kann zu Fehlern führen, im Fall von Zählsystemen z.B. dazu, dass ein Passieren eines Objekts oder einer Person nicht mitgezählt wird.

Der vorliegenden Erfindung liegt die Aufgabe zugrunde, das geschilderte Problem zu überwinden, also ein Überwachungssystem oder ein Verfahren zum Betreiben eines Überwachungssystems vorzuschlagen, mit dem sich durch Hindernissen im Überwachungsraum verursachte Fehldetektionen verhindern lassen.

Diese Aufgabe wird erfindungsgemäß gelöst durch ein Verfahren zum Konfigurieren eines auf einer Aufnahme von Höhenkarten beruhenden Überwachungssystems mit den Merkmalen des Hauptanspruchs sowie durch ein konfigurierbares Überwachungssystem mit den Merkmalen des Nebenanspruchs. Vorteilhafte Ausgestaltungen und Weiterentwicklungen der Erfindung ergeben sich mit den Merkmalen der Unteransprüche.

Das vorgeschlagene Verfahren umfasst folgende Schritte:
- Aufnehmen einer Höhenkarte eines Überwachungsbereichs mit dem Überwachungssystem in einem Zustand, in dem sich keine zu erfassenden Objekte oder Personen im Überwachungsbereich befinden,
- Ermitteln von durch Hindernisse verursachten Störstellen in der so aufgenommenen Höhenkarte,
- Definieren eines Detektionsbereichs als Teilbereich der Höhenkarte derart, dass alle oder zumindest ein Teil der Störstellen außerhalb des Detektionsbereichs liegen,
- Einstellen einer Auswerteeinheit des Überwachungssystems derart, dass sie nur Bewegungen innerhalb des Detektionsbereichs auswertet.

Dadurch wird das zuvor beschriebene Problem vermieden, weil sich keine oder zumindest nicht mehr so viele Hindernisse in den Höhenkarten wiederspiegeln, die bei einem Betriebe des Überwachungssystems nach dem Konfigurieren aufgenommen werden. Dadurch wird vermieden, dass Störstellen mit für die Überwachung unbeachtlichen Tiefeninformationen bei der Auswertung der Höhenkarten stören.

Bei dem Überwachungssystem kann es sich insbesondere um ein Personenzählsystem oder einen anderen Zähler handeln. In diesem Fall sollen sich also keine zu zählenden Objekte oder Personen im Überwachungsbereich befinden, wenn die Höhenkarte im Rahmen der Konfigurierung aufgenommen wird.

Die Höhenkarten können z.B. mithilfe einer Stereokamera des Überwachungssystems gewonnen werden, indem mit der Stereokamera aufgenommene Stereobilder zum Ermitteln von Tiefeninformationen ausgewertet werden. Die Stereokamera kann z.B. von oben oder schräg von oben auf den Überwachungsbereich gerichtet sein.

Die Störstellen können als Bereiche der Höhenkarte definiert werden, in denen Höhenwerte der Höhenkarte einen Schwellenwert übersteigen. Dabei ist es möglich, dass der Schwellenwert für unterschiedliche Bereiche der Höhenkarte unterschiedlich definiert wird, z.B. wenn die Höhenkarte mit einem schräg auf den Überwachungsbereich gerichteten Kamerasystem gewonnen wird.

Das Einstellen der Auswerteeinheit kann nach den vorhergehenden Schritten so erfolgen, dass alle Höhenwerte aufgenommener Höhenkarten außerhalb des Detektionsbereichs auf Null oder einen anderen vorbestimmten Wert gesetzt werden.

Eine bevorzugte Ausführung des Verfahrens sieht vor, dass zum Definieren des Detektionsbereichs folgende Unterschritte durchgeführt werden:
- Definieren eines Fensters als Teilbereich der Höhenkarte, der einen Eingangsbereich mit einem Ausgangsbereich verbindet,
- Variieren von (einen Polygonzug und vorzugsweise ein Rechteck bildenden) Rändern des Fensters unter Einhaltung von Randbedingungen und Bestimmen eines Randverlaufs, bei dem eine Anzahl von Störstellen innerhalb des Fensters minimiert wird.

Das Fenster kann dabei so definiert werden, dass die Ränder des Fensters einen Polygonzug bilden, in einer einfachen Ausführung z.B. ein Rechteck oder ein Parallelogramm.

Vorzugsweise können die Schritte des Verfahrens, insbesondere das Ermitteln der Hindernisse in der zur Konfigurierung aufgenommenen Höhenkarte, das Definieren des Detektionsbereichs und das davon abhängige Einstellen der Auswerteeinheit, durch eine entsprechende Programmierung der Auswerteeinheit automatisch durchgeführt werden. Das gilt auch für eventuell vorgesehene Unterschritte des Verfahrens.

Der Eingangsbereich und der Ausgangsbereich, die durch das Fenster verbunden sind, können z.B. durch zwei einander gegenüberliegende Ränder der Höhenkarte oder durch Teile einander gegenüberliegender Ränder der Höhenkarte definiert sein. Sie sollten so gewählt werden, dass eine Bewegung zu zählender Objekte oder Personen vom Eingangsbereich zum Ausgangsbereich führen.

Es kann vorgesehen sein, dass die Ränder des Fensters nur innerhalb von seitlichen Begrenzungen eines Suchbereichs variiert werden, die zuvor definiert werden, indem jeweils eine Linie von einem Rand der Höhenkarte um einen nach oben begrenzten Wert in Richtung Bildmitte verschoben wird und, sofern diese Linie dabei auf Störstellen trifft, ein Verlauf dieser Linie als Begrenzung gewählt wird, bei dem die Linie erstmals auf eine Störstelle trifft. Andernfalls kann der jeweilige Rand der Höhenkarte selbst als seitliche Begrenzung festgelegt werden Die Linien können dabei z.B. jeweils durch eine Bildzeile oder eine Bildspalte gegeben sein. Zusätzlich oder alternativ können natürlich auch andere Randbedingungen für die Variation der Ränder bzw. des Fensters festgelegt werden.

Das Variieren der Ränder des Fensters kann auf unterschiedliche Art erfolgen und jeweils einem Algorithmus folgen. In einer besonders einfach realisierbaren Ausführung des Verfahrens, die zu zufriedenstellenden Ergebnissen führt, können die Ränder des Fensters derart variiert werden, dass das Fenster oder ein Teil des Fensters zunächst eine definierte Größe und Form - z.B. eine rechteckige Form - hat und ohne Verändern der Größe und Form über die Höhenkarte verschoben wird - ggf. beispielsweise von einer ersten bis zu einer zweiten der genannten Begrenzungen - und dabei eine Position des Fensters ermittelt wird, bei der die Anzahl von Störstellen innerhalb des Fensters minimiert wird, worauf von dieser Position des Fensters ausgehend zumindest einer der Ränder des Fensters genau so weit in eine das Fenster vergrößernde Richtung vorzugsweise parallel verschoben wird, bis die Anzahl der Störstellen innerhalb des Fensters wieder zuzunehmen beginnt.

Ein entsprechend vorteilhaftes konfigurierbares Überwachungssystem umfasst ein vorzugsweise durch eine Stereokamera gegebenes Kamerasystem zum Aufnehmen von Höhenkarten eines Überwachungsbereichs und eine Auswerteeinheit, die programmtechnisch eingerichtet ist zum Auswerten von mit dem Kamerasystem aufgenommenen Höhenkarten und zum Detektieren von Änderungen zwischen zeitlich aufeinander folgenden Höhenkarten, also zum Detektieren von Bewegungen. Ferner ist die Auswerteeinheit programmtechnisch eingerichtet zum vorzugsweise automatischen Durchführen folgender durch einen Konfigurationsbefehl auslösbarer Schritte:
- Ermitteln von durch Hindernisse verursachten Störstellen in einer mit dem Kamerasystem aufgenommenen Höhenkarte,
- Definieren eines Detektionsbereichs als Teilbereich der Höhenkarte derart, dass alle oder zumindest ein Teil der Störstellen außerhalb des Detektionsbereichs liegen,
- Einstellen der Auswerteeinheit derart, dass sie nur Bewegungen innerhalb des Detektionsbereichs auswertet.

Diese Schritte können insbesondere wie oben im Zusammenhang mit dem Verfahren beschrieben ausgestaltet sein. Das Überwachungssystem kann insbesondere ein Personenzählsystem oder ein anderer Zähler sein und ist durch die beschriebene Gestaltung der Auswerteeinheit geeignet, durch das zuvor erläuterte Verfahren konfiguriert zu werden bzw. sich selbst zu konfigurieren und so an eine bestimmte Ausgangssituation im Überwachungsbereich angepasst zu werden.

Ein Ausführungsbeispiel der Erfindung wird nachfolgend anhand der Figuren 1 bis 13 erläutert. Es zeigt
- Fig. 1: Ein Zählsystem zum Zählen von durch eine Tür tretenden Personen und einen durch dieses Zählsystem überwachten Überwachungsraum,
- Fign. 2 bis 5: jeweils eine mit dem Zählsystem aufgenommene Höhenkarte des Überwachungsraums in vier aufeinanderfolgenden Arbeitsschritten eines Verfahrens zum Konfigurieren des Überwachungssystems,
- Fig. 6: in entsprechender Darstellung eine Höhenkarte bei einer anderen Situation im Überwachungsbereich,
- Fig. 7: eine entsprechende Darstellung der gleichen Höhenkarte nach einer durch das Verfahren zum Konfigurieren vorgenommenen Manipulierung,
- Fign. 8 bis 13: in einer den Figuren 6 und 7 entsprechenden Weise für drei weitere abweichende Situationen in jeweils aufeinanderfolgenden Figuren die Höhenkarte vor und nach einer durch das Verfahren vorgenommenen Manipulation.

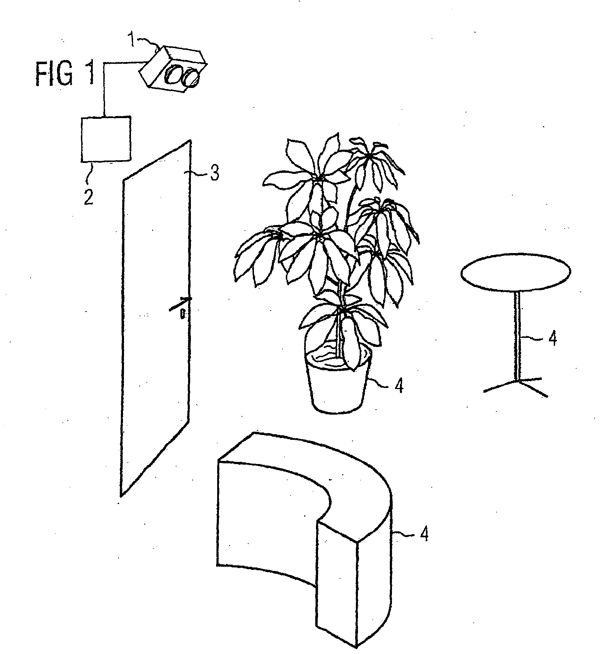

Das in Fig. 1 dargestellte Zählsystem, das nachfolgend auch als Counter bezeichnet wird, weist eine auf einen Überwachungsbereich gerichtete Stereokamera 1 und eine Auswerteeinheit 2 auf, mit der von der Stereokamera 1 gewonnene Bilddaten ausgewertet werden. Das Zählsystem soll hier zum Zählen von Personen dienen, die durch eine Tür 3 treten, die sich unmittelbar hinter dem Überwachungsbereich befindet. Im Überwachungsbereich selbst befinden sich hier einige Hindernisse 4. Die Hindernisse 4 sind hier als Topfpflanze, Theke und Stehtisch dargestellt, können aber auch durch andere Objekte gegeben sein, z. B. durch eine Tür oder einen Handlauf. Auch kann das Zählsystem in anderen Umgebungen verwendet werden, z.B. in einem Autobus. Das gleiche oder ein vergleichbares Zählsystem kann schließlich auch zum Zählen von anderen durch einen Überwachungsbereich transportierten Objekten verwendet werden.

Ein Hauptalgorithmus des Counters, nach dem die Auswerteinheit 2 arbeitet, basiert darauf, aus mit der Stereokamera 1 aufgenommenen Stereobildern Höhenkarten zu berechnen und diese Höhenkarten auszuwerten. Dazu ist die Auswerteeinheit 2 insbesondere zum Detektieren von Änderungen zwischen zeitlich aufeinander folgenden Höhenkarten eingerichtet.

Bei der Installation des Counters können die Hindernisse 4, die unter Umständen nicht entfernt werden können oder dürfen, zu Versagen oder Fehlfunktionen des Zählsystems führen, wenn keine weiteren Maßnahmen ergriffen werden. Solche Hindernisse 4 werden dann nämlich auf der aufgenommenen Höhenkarte rekonstruiert. Wenn Personen sich diesen Objekten nähern, können sie auf der Höhenkarte mit den Objekten verschmelzen. Das wiederum führt zu schlechten Zählergebnissen, weil bei der Bildauswertung Fehler passieren. Abbildungen solcher Hindernisse 4 werden hier als Störstellen bezeichnet.

Um die auf der Höhenkarte aufgetretenen Störstellen auszublenden, wird nun ein beschränkter Detektionsbereich als Teilbereich der Höhenkarte festgelegt, der nachfolgend auch als ROI (Region of Interest) bezeichnet wird. Höhenwerte außerhalb von der ROI werden auf Null oder einen anderen definierten Wert gesetzt, wodurch die Hindernisse 4 ausgeblendet werden und nicht mehr mit den Hindernissen 4 verschmelzen können. Das bedeutet, dass nur die Bewegungen oder Personen oder Objekte in der ROI betrachtet werden, weshalb die Zählgenauigkeit direkt von der Definition der ROI abhängig ist. Mit Hilfe des hier beschriebenen Verfahrens kann der Detektionsbereich bzw. die ROI im Rahmen einer Konfigurierung einmalig bei der Installation oder zu anderen definierten Zeitpunkten bestimmt werden. Die Festlegung kann entweder durch einen Installateur, mit automatischer Unterstützung oder vollautomatisch geschehen.

Das hier beschriebene Verfahren bestimmt automatisch eine unter bestimmten Randbedingungen optimale ROI auf der Höhenkarte, um eine robuste, zufriedenstellende Zählgenauigkeit des Zählsystems zu sichern. Dabei geht das Verfahren nicht zu Lasten der Rechenzeit der Hardware. In einem Durchlaufbereich, der von einer zu zählenden Person durchquert wird, sollten wenn möglich keine Störstellen auftreten.

Bei dem Verfahren zum Konfigurieren des Zählsystems wird zunächst mit Hilfe der Sterokamera 1 eine Höhenkarte des Überwachungsbereichs in einem Zustand aufgenommen, in dem sich keine zu erfassenden Objekte oder Personen im Überwachungsbereich befinden. Dann werden durch die dazu entsprechend programmierte Auswerteeinheit 2 durch die Hindernisse 4 verursachte Störstellen 5 in der so aufgenommenen Höhenkarte ermittelt und die ROI als Teilbereich der Höhenkarte derart definiert, dass alle oder zumindest ein Teil der Störstellen 5 außerhalb der ROI liegen. Dabei werden die Störstellen 5 erkannt als Bereiche, in denen die Höhenwerte einen bestimmten - unter Umständen ortsabhängigen - Schwellenwert überschreiten. Das Definieren der ROI erfolgt z.B. in der nachfolgend ausführlicher beschriebenen Weise. Schließlich wird die Auswerteeinheit 2 derart eingestellt, dass sie zum Zählen passierender Personen oder Objekte nur Bewegungen innerhalb der ROI auswertet. Das kann im einfachsten Fall dadurch geschehen, dass die Höhenwerte außerhalb der ROI auf Null oder einen anderen definierten Wert gesetzt werden, der beim Detektierten von Bewegungen von Personen oder Objekten nicht stört.

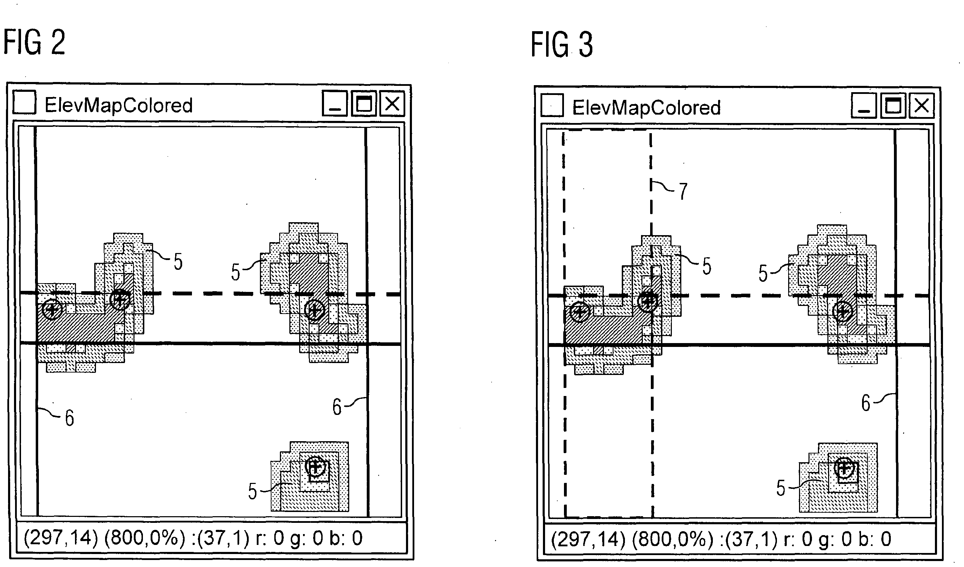

In Fig. 2 ist die zur Durchführung dieses Verfahrens aufgenommene bzw. durch Auswertung eines aufgenommenen Stereobilds gewonnene Höhenkarte dargestellt. Die in Fig. 1 erkennbaren Hindernisse 4 spiegeln sich in Störstellen 5 dieser Höhenkarte wieder. Der Durchlaufbereich verläuft auf dieser Höhenkarte von oben nach unten. Der weitere Verlauf des Verfahrens umfasst mehrere Schritte: Falls Störstellen 5 sich wie hier an den Seiten der Höhenkarte befinden, werden zunächst Positionen äußerster Ränder der seitlichen Störstellen 5 bestimmt. Dazu wird hier von rechts und links vom Rand der Höhenkarte in Richtung zum Zentrum der Höhenkarte für jede Spalte der Höhenkarte geprüft, ob die jeweilige Spalte Störstellen 5 beinhaltet, also an irgendeiner Stelle auf eine Störstelle 5 trifft. Bei anderer Orientierung könnten natürlich auch Bildzeilen statt Bildspalten entsprechend verschoben und geprüft werden. Der Vorgang wird beendet, wenn eine Spalte mit Störstellen 5 gefunden wird. Die gefundenen Spalten entsprechen den äußersten Rändern der seitlichen Störstellen 5. Diese Spalten werden nun als in Fig. 2 eingezeichnete und dort vertikal verlaufende seitliche Begrenzungen 6 eines Suchbereichs definiert. Wenn in einem Bereich vorgegebener Breite keine Spalten mit Störstellen 5 gefunden werden, werden stattdessen die seitlichen Ränder der Höhenkarte selbst als seitliche Begrenzungen 6 des Suchbereichs definiert. Die ROI wird jetzt nur noch innerhalb der Begrenzungen 6 gesucht.

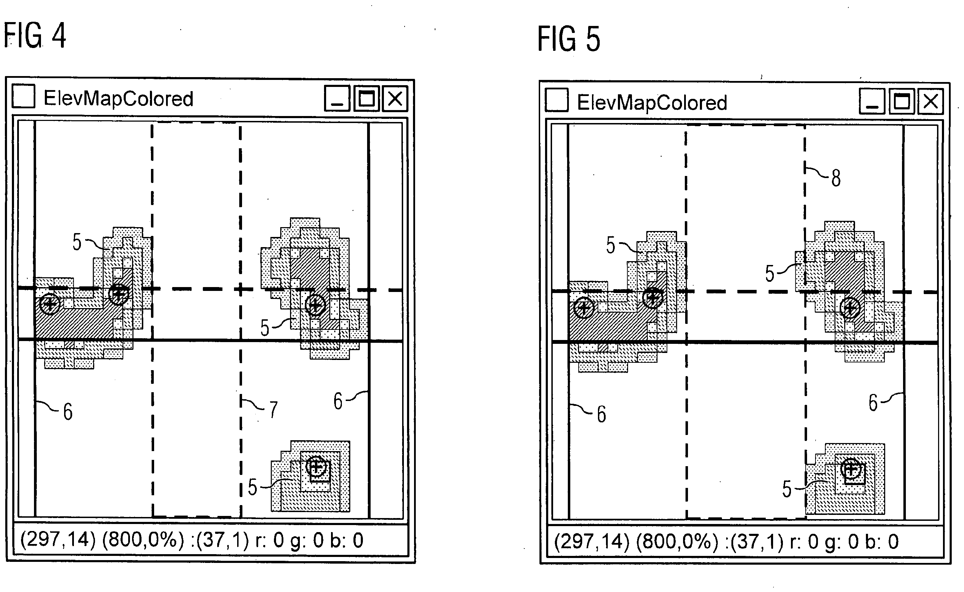

Wie in den Figuren 3 und 4 gezeigt, wird dazu ein Fenster 7 vorgegebener Fenstergröße - entsprechend ungefähr der Breite der Tür 3 - und vorgegebener Form - hier in Form eines Rechtecks - von links nach rechts durch den Suchbereich geschoben. Dabei wird das Fenster 7 mit den wenigsten Störstellen in der horizontalen Richtung zwischen den in Schritt 1 bestimmten Rändern gesucht. Das so ermittelte Fenster 7 ist in Fig. 4 gezeigt.

Nun wird der rechte Rand des im vorherigen Schritt gefundenen Fensters nach rechts verschoben und dadurch das Fenster 7 erweitert, bis der rechte Rand weitere Störstellen 5 berührt. Die so erhaltene Form und Lage des Fensters 7 definiert nun den in Fig. 5 dargestellten Detektionsbereich 8 also die finale ROI.

Das Fenster 7 wird bei den in den Figuren 3 bis 5 gezeigten Schritten so definiert, dass es einen Eingangsbereich mit einem Ausgangsbereich verbindet, wobei ein Spezialfall vorliegt, in dem der Eingangsbereich durch den ganzen oberen und der Ausgangsbereich durch den ganzen unteren Rand gebildet wird. Denkbar sind aber auch Abwandlungen, bei denen Ein- und Ausgangsbereich anders oder enger definiert sind, so dass sich weitere Randbedingungen ergeben. Dabei können Ein- und Ausgangsbereich auch individuelle Mindestbreiten haben. Auch kann das Fenster 7 - insbesondere bei anders definierten Ein- und Ausgangsbereichen - andere polygonale Formen haben und abweichend variiert werden, so dass auch beliebig komplexe oder einfache symmetrische Polygonzüge als ROI automatisch berechnet werden können. Es kann auch vorgesehen sein, dass Störstellen bestimmter Eigenschaften dabei ignoriert werden.

Das beschriebene Verfahren hat einen sehr geringen Rechenaufwand und benötigt daher geringe Hardwareressourcen. Die hier beschriebene bevorzugte Ausführung des Verfahrens erleichtert die Arbeit der Installation, da die ROI nicht manuell vom Installateur festgelegt werden muss. Es besteht auch die Möglichkeit, zu jedem Zeitpunkt durch eine entsprechende neue Konfigurierung ohne einen menschlichen Eingriff auf eine Veränderung der Umgebung zu reagieren. Die Konfigurierung kann dabei jeweils durch eine entsprechende Eingabe an der Auswerteeinheit als Konfigurationsbefehl ausgelöst werden. Im Fall eines Fehlers ist eine manuelle Nachjustage möglich.

Die übrigen Figuren zeigen die als Ausgangspunkt dienende, mit der Stereokamera 1 gewonnene Höhenkarte und eine durch das Konfigurieren in beschriebener Art manipulierte Höhenkarte für verschiedene Situationen, die sich durch verschiedene Anordnungen von Hindernissen 4 im Überwachungsbereich unterscheiden. Die endgültige Höhenkarte ergibt sich dabei jeweils dadurch, dass die Höhenwerte außerhalb der ROI auf einen konstanten Wert gesetzt werden.

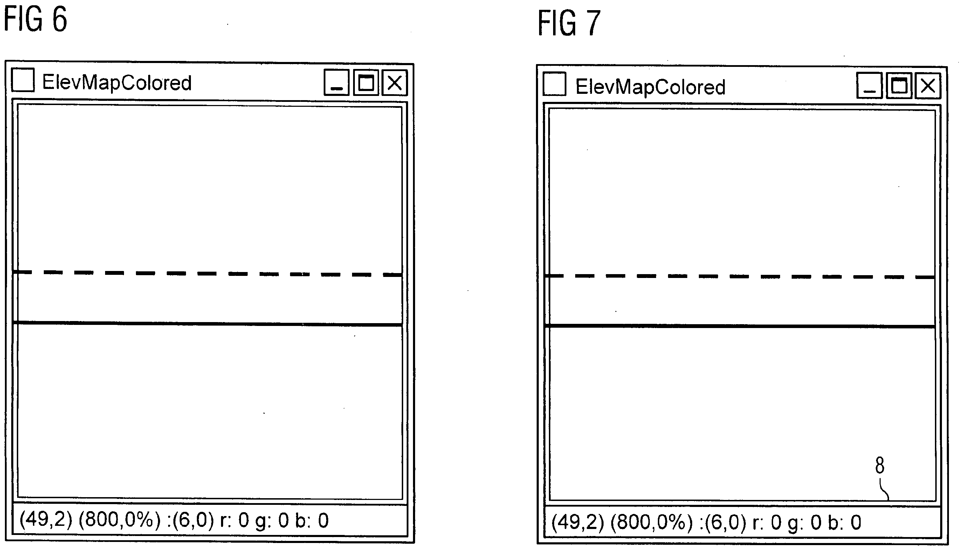

Fig. 6 zeigt die zum Konfigurieren aufgenommene Höhenkarte im Fall eines freien Überwachungsbereichs ohne Hindernisse 4. Dementsprechend zeigt diese Höhenkarte keine Störstellen 5. Der für diesen Fall mit dem Verfahren berechnete Detektionsbereich 8 ist in Fig. 7 dargestellt und entspricht erwartungsgemäß der ganzen Höhenkarte. Die ROI hat hier also maximale Größe.

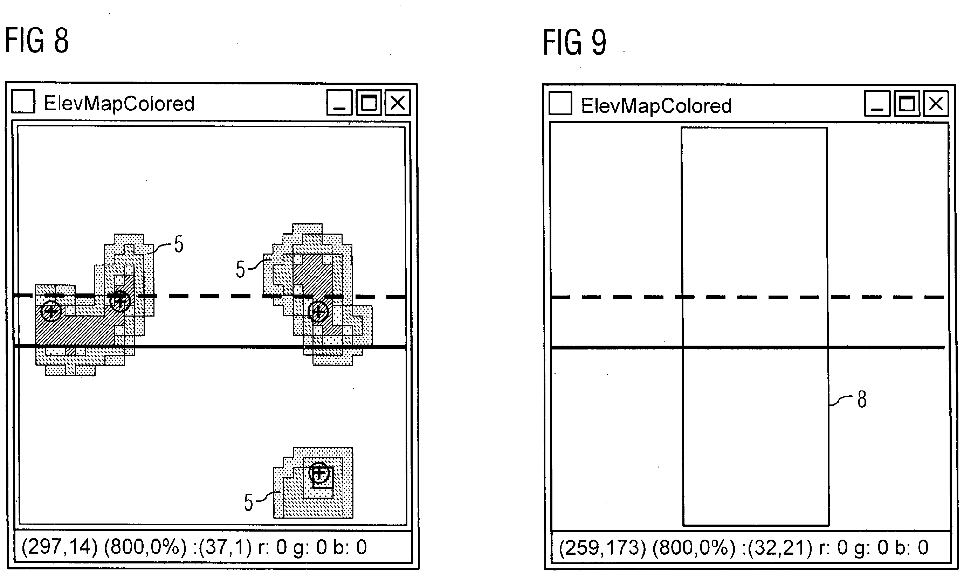

Wie in den Figuren 6 und 7 sind auch in den folgenden Paaren von Figuren - Figuren 8 und 9, 10 und 11 sowie 12 und 13 - sind für verschiedene Situationen jeweils zwei Höhenkarten dargestellt. In den Figuren 8, 10 und 12 ist die zum Konfigurieren aufgenommene Höhenkarte jeweils vor der Durchführung der weiteren Schritte des Verfahrens gezeigt. In den Figuren 9, 11 und 13 ist die Höhenkarte nach Durchführung des Verfahrens zu sehen. Die ermittelte ROI ist dort jeweils als Detektionsbereich 8 eingezeichnet.

Die Figuren 8 und 9 zeigen einen Fall mit Störstellen 5 an der linken und der rechten Seite der Höhenkarte, entsprechend Hindernissen 4 an rechter und linker Seite des Überwachungsbereichs. Diese Situation entspricht der aus den Figuren 1 bis 5. Das Ergebnis des Verfahrens entspricht dem erwarteten Ergebnis: Die berechnete ROI liegt genau zwischen dem linken Rand der rechten Störstellen 5 und dem rechten Rand der linken Störstellen 5.

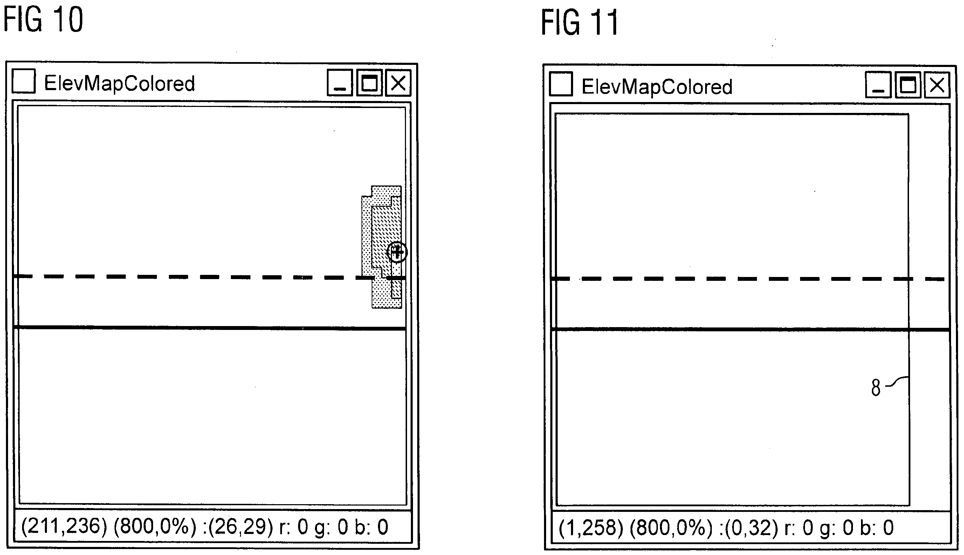

Die Figuren 10 und 11 zeigen eine Situation, bei der Störstellen 5 nur an der rechten Seite der Höhenkarte auftreten. Wieder entspricht das Ergebnis des Verfahrens den Erwartungen: Der linke Rand der berechneten ROI entspricht dem linken Rand der Höhenkarte, und der rechte Rand der ROI liegt auf dem linken Rand der rechts liegenden Störstellen 5.

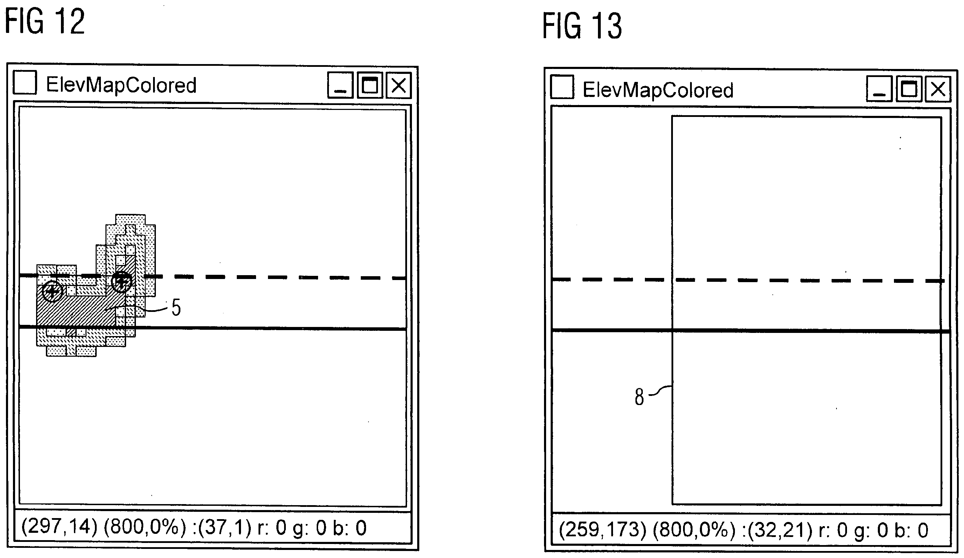

Die Figuren 12 und 13 schließlich zeigen einen Fall, bei dem ein Hindernis 4 nur an einer linken Seite des Überwachungsbereichs vorkommt, so dass die Höhenkarte Störstellen 5 nur an der linken Seite zeigt. Hier entspricht der rechte Rand der berechneten ROI dem rechten Rand der Höhenkarte, und der linke Rand der ROI liegt auf dem rechten Rand der links liegenden Störstellen 5.

Das hier beschriebene Verfahren kann schließlich auch mit anderen Verfahren zur Hintergrundsegmentierung kombiniert werden. Mit einem derartigen an sich bekannten Verfahren können z.B. zusätzliche temporäre, also nicht statische Störstellen im Überwachungsbereich eliminiert werden, wenn diese für eine einstellbare Zeitdauer vorhanden sind. Dieses Eliminieren oder Entfernen von Störstellen kann fortlaufend durchgeführt werden und ist typischerweise mit einer Zeitverzögerung verbunden. Wird zuvor ein Verfahren zum Konfigurieren wie beschrieben durchgeführt, wird der Rechenaufwand für jedes weitere Verfahren zur Auswertung des Hintergrunds reduziert, weil durch den begrenzten Detektionsbereich mit einem reduzierten Datensatz gearbeitet werden kann. Eine Kombination beider Verfahren ist daher besonders vorteilhaft.

## Patentansprüche

1. Verfahren zum Konfigurieren eines auf einer Aufnahme von Höhenkarten beruhenden Überwachungssystems, umfassend folgende Schritte:
- Aufnehmen einer Höhenkarte eines Überwachungsbereichs mit dem Überwachungssystem in einem Zustand, in dem sich keine zu erfassenden Objekte oder Personen im Überwachungsbereich befinden,
- Ermitteln von durch Hindernisse (4) verursachten Störstellen (5) in der so aufgenommenen Höhenkarte,
- Definieren eines Detektionsbereichs (8) als Teilbereich der Höhenkarte derart, dass alle oder zumindest ein Teil der Störstellen (5) außerhalb des Detektionsbereichs (8) liegen,
- Einstellen einer Auswerteeinheit (2) des Überwachungssystems derart, dass sie nur Bewegungen innerhalb des Detektionsbereichs (8) auswertet.

2. Verfahren nach Anspruch 1, **dadurch gekennzeichnet, dass** die Höhenkarten mit einer Stereokamera (1) des Überwachungssystems aufgenommen werden.

3. Verfahren nach einem der Ansprüche 1 oder 2, **dadurch gekennzeichnet, dass** die Störstellen (5) als Bereiche der Höhenkarte definiert werden, in denen Höhenwerte der Höhenkarte einen Schwellenwert übersteigen.

4. Verfahren nach Anspruch 3, **dadurch gekennzeichnet, dass** der Schwellenwert einheitlich oder für unterschiedliche Bereiche der Höhenkarte unterschiedlich definiert wird.

5. Verfahren nach einem der Ansprüche 1 bis 4, **dadurch gekennzeichnet, dass** durch das Einstellen der Auswerteeinheit (2) alle Höhenwerte aufgenommener Höhenkarten außerhalb des Detektionsbereichs auf Null oder einen anderen vorbestimmten Wert gesetzt werden.

6. Verfahren nach einem der Ansprüche 1 bis 5, **dadurch gekennzeichnet, dass** zum Definieren des Detektionsbereichs (8) folgende Unterschritte durchgeführt werden:
- Definieren eines Fensters (7) als Teilbereich der Höhenkarte, der einen Eingangsbereich mit einem Ausgangsbereich verbindet,
- Variieren von Rändern des Fensters (7) unter Einhaltung von Randbedingungen und Bestimmen eines Randverlaufs, bei dem eine Anzahl von Störstellen (5) innerhalb des Fensters (7) minimiert wird.

7. Verfahren nach Anspruch 6, **dadurch gekennzeichnet, dass** der Eingangsbereich und der Ausgangsbereich durch zwei einander gegenüberliegende Ränder der Höhenkarte oder durch Teile einander gegenüberliegender Ränder der Höhenkarte definiert sind.

8. Verfahren nach einem der Ansprüche 6 oder 7, **dadurch gekennzeichnet, dass** die Ränder des Fensters (7) nur innerhalb von seitlichen Begrenzungen (6) eines Suchbereichs variiert werden, die zuvor definiert werden, indem jeweils eine Linie von einem Rand der Höhenkarte um einen nach oben begrenzten Wert in Richtung Bildmitte verschoben wird und, sofern diese Linie dabei auf Störstellen (5) trifft, ein Verlauf dieser Linie als Begrenzung (6) gewählt wird, bei dem die Linie erstmals auf eine Störstelle (5) trifft.

9. Verfahren nach einem der Ansprüche 6 bis 8, **dadurch gekennzeichnet, dass** die Ränder des Fensters (7) derart variiert werden, dass das Fenster (7) oder ein Teil des Fensters (7) zunächst eine definierte Größe und Form hat und ohne Verändern der Größe und Form über die Höhenkarte verschoben wird und dabei eine Position des Fensters (7) ermittelt wird, bei der die Anzahl von Störstellen (5) innerhalb des Fensters (7) minimiert wird, worauf von dieser Position des Fensters (7) ausgehend zumindest einer der Ränder des Fensters (7) so weit in eine das Fenster (7) vergrößernde Richtung verschoben wird, bis die Anzahl der Störstellen (5) innerhalb des Fensters (7) wieder zuzunehmen beginnt.

10. Konfigurierbares Überwachungssystem, umfassend ein Kamerasystem zum Aufnehmen von Höhenkarten eines Überwachungsbereichs und eine Auswerteeinheit (2), die programmtechnisch eingerichtet ist zum Auswerten von mit dem Kamerasystem aufgenommenen Höhenkarten und zum Detektieren von Änderungen zwischen zeitlich aufeinander folgenden Höhenkarten, wobei die Auswerteeinheit (2) ferner programmtechnisch eingerichtet ist zum Durchführen folgender durch einen Konfigurationsbefehl auslösbarer Schritte:
- Ermitteln von durch Hindernisse (4) verursachten Störstellen (5) in einer mit dem Kamerasystem aufgenommenen Höhenkarte,
- Definieren eines Detektionsbereichs (8) als Teilbereich der Höhenkarte derart, dass alle oder zumindest ein Teil der Störstellen (5) außerhalb des Detektionsbereichs (8) liegen,
- Einstellen der Auswerteeinheit (2) derart, dass sie nur Bewegungen innerhalb des Detektionsbereichs (8) auswertet.

11. Überwachungssystem nach Anspruch 10, **dadurch gekennzeichnet, dass** es ein Personenzählsystem oder ein anderer Zähler ist.

## Claims

1. A method for configuring a monitoring system based on a recording of relief maps. comprising the following steps
- recording a relief map of a monitored region with a monitoring system, in a condition in which none of objects or persons to be detected are located in the monitored region,
- determining disruption locations (5) caused by obstacles (4) in the thus recorded relief map,
- defining a detection region (8) as a part region of the relief map, in a manner such that all or at least a part of the disruption regions (5) lie outside the detection region (8),
- setting an evaluation unit (2) of the monitoring system in a manner such that it evaluates movements only within the detection region (8).

2. A method according to claim 1, **characterised in that** the relief maps are recorded with a stereo-camera (1) of the monitoring system.

3. A method according to one of the claims 1 or 2, **characterised in that** the disruption locations (5) are defined as regions of the relief map, in which height values of the relief map exceed a threshold value.

4. A method according to claim 3, **characterised in that** the threshold value is defined uniformly or differently for different regions of the relief map.

5. A method according to one of the claims 1 to 4, **characterised in that** all height values of recorded relief maps outside the detection region are set to zero or to another predefined value by way of setting the evaluation unit (2).

6. A method according to one of the claims 1 to 5, **characterised in that** for defining the detection region (8), the following sub-steps are carried out:
- defining a window (7) as a part region of the relief map which connects an entrance region to an exit region,
- varying edges of the window (7) amid the retention of constraints and determining an edge course, at which a number of disruption locations within the window (7) is minimised.

7. A method according to claim 6, **characterised in that** the entrance region and the exit region are defined by two edges of the relief map which lie opposite to one another, or by parts of edges of the relief map which lie opposite one another.

8. A method according to one of the preceding claims 6 or 7, **characterised in that** the edges of the window (7) are only varied within lateral delimitations (6) of a search region which are previously defined, by way of in each case a line being shifted from an edge of the relief map by a value limited to the top, in the direction of the picture middle, and, inasmuch as this line thereby meets a disruption location (5), a course of this line, at with which the line meets a disruption location (5) for the first time, being selected as a limitation (6).

9. A method according to one of the claims 6 to 8, **characterised in that** the edges of the window (7) are varied in a manner such that the window (7) or a part of the window (7) firstly has a defined size and shape and without changing the size and shape is displaced over the relief map and thereby a position of the window (7), at which the number of disruption locations (5) within the window (7) is minimised, is determined, whereupon departing from this position of the window (7), at least one of the edges of the window (7) is displaced so far in a direction enlarging the window (7), until the number of disruption locations (5) within the window (7) begins to increase again.

10. A configurable monitoring system, comprising a camera system for recording relief maps of a monitored region, and an evaluation unit (2) which is set up with regard to programming technology, to evaluate relief maps recorded with the camera system, and for detecting changes between temporally consecutive relief maps, wherein the evaluation unit (2) is moreover set up with regard to programming technology, to carry out the following steps which can be activated by a configuration command:
- determining disruption locations (5) caused by obstacles (4), in a relief map recorded with the camera system,
- defining a detection region (8) as a part region of the relief map, in a manner such that all or at least a part of the disruption locations (5) lie outside the detection region (8),
- setting the evaluation unit (2) in a manner such that it only evaluates movements within the detection region (8).

11. A monitoring system according to claim 10, **characterised in that** it is a person-counting system or a different counter.

## Revendications

1. Procédé de configuration d'un système de surveillance reposant sur l'enregistrement de cartes d'altitudes, comprenant les étapes suivantes :
- enregistrement d'une carte d'altitudes d'une zone de surveillance avec le système de surveillance dans un état dans lequel aucun objet ni aucune personne à détecter ne se trouve dans la zone de surveillance,
- détermination de points de perturbation (5) générés par des obstacles (4) dans la carte d'altitudes ainsi enregistrée,
- définition d'une zone de détection (8) en tant que zone partielle de la carte d'altitudes de façon à ce que tous ou au moins une partie des points de perturbation (5) se trouvent à l'extérieur de la zone de détection (8),
- réglage d'une unité d'analyse (2) du système de surveillance de façon à ce qu'elle analyse uniquement les mouvements à l'intérieur de la zone de détection (8).

2. Procédé selon la revendication 1, **caractérisé en ce que** les cartes d'attitudes sont enregistrées avec une caméra stéréoscopique (1) du système de surveillance.

3. Procédé selon la revendication 1 ou 2, **caractérisé en ce que** les points de perturbation (5) sont définis comme des zones de la carte d'altitudes dans lesquelles les valeurs d'altitudes de la carte d'altitudes dépassent une valeur seuil.

4. Procédé selon la revendication 3, **caractérisé en ce que** la valeur seuil est définie de manière unique ou différemment pour des zones différentes de la carte d'altitudes.

5. Procédé selon l'une des revendications 1 à 4, **caractérisé en ce que**, grâce au réglage de l'unité d'analyse (2), toutes les valeurs d'altitudes des cartes d'altitudes enregistrées sont réglées, à l'extérieur de la zone de détection, à zéro ou à une autre valeur prédéterminée.

6. Procédé selon l'une des revendications 1 à 5, **caractérisé en ce que**, pour la définition de la zone de détection (8), les étapes secondaires suivantes sont exécutées :
- définition d'une fenêtre (7) en tant que zone partielle de la carte d'altitudes qui relie une zone d'entrée avec une zone de sortie,
- variation des bords de la fenêtre (7) en respectant des contraintes et détermination d'un tracé de bords, pour lequel un nombre de points de perturbation (5) à l'intérieur de la fenêtre (7) est minimisé.

7. Procédé selon la revendication 6, **caractérisé en ce que** la zone d'entrée et la zone de sortie sont définies par deux bords superposés de la carte d'altitudes ou par des parties de bords superposés de la carte d'altitudes.

8. Procédé selon l'une des revendications 6 ou 7, **caractérisé en ce que** les bords de la fenêtre (7) sont modifiés uniquement à l'intérieur de limites latérales (6) d'une zone de recherche, qui ont été définies préalablement, en décalant une ligne d'un bord de la carte d'altitudes d'une valeur limitée vers le haut en direction du centre de l'image, si cette ligne rencontre des points de perturbation (5), un tracé de cette ligne est choisi en tant que limite (6), pour lequel la ligne rencontre un point de perturbation (5) pour la première fois.

9. Procédé selon l'une des revendications 6 à 8, **caractérisé en ce que** les bords de la fenêtre (7) sont modifiés de façon à ce que la fenêtre (7) ou une partie de la fenêtre (7) ait d'abord une taille et une forme définies et soit décalée sans modification de la taille et de la forme au-dessus de la carte d'altitudes et une position de la fenêtre (7) étant déterminée, pour laquelle le nombre de points de perturbation (5) à l'intérieur de la fenêtre (7) est minimisé, à la suite de quoi, au moins un des bords de la fenêtre (7) est décalé à partir de cette position de la fenêtre (7) vers une direction agrandissant la fenêtre (7), jusqu'à ce que le nombre de points de perturbation (5) recommence à augmenter à l'intérieur de la fenêtre (7).

10. Système de surveillance configurable comprenant un système de caméra pour l'enregistrement de cartes d'altitudes d'une zone de surveillance et une unité d'analyse (2), qui est conçue du point de vue du programme pour l'analyse de cartes d'altitudes enregistrées avec le système de caméra et pour la détection de modifications entre des cartes d'altitudes se succédant dans le temps, l'unité d'analyse (2) étant en outre conçue du point de vue du programme pour l'exécution des étapes suivantes, pouvant être déclenchées par une instruction de configuration :
- détermination de points de perturbation (5) générés par des obstacles (4) dans une carte d'altitudes enregistrée avec le système de caméra,
- définition d'une zone de détection (8) en tant que zone partielle de la carte d'altitudes, de façon à ce que tous ou au moins une partie des points de perturbation (5) se trouvent à l'extérieur de la zone de détection (8),
- réglage de l'unité d'analyse (2) de façon à ce qu'elle analyse uniquement les mouvements à l'intérieur de la zone de détection (8),

11. Système de surveillance selon la revendication 10, **caractérisé en ce qu'**il s'agit d'un système de comptage de personnes ou d'un autre compteur.
